# EUROPÄISCHE PATENTSCHRIFT

(11) **EP 2 646 310 B1**
(45) Veröffentlichungstag und Bekanntmachung des Hinweises auf die Patenterteilung: **01.04.2015**
(21) Anmeldenummer: 11773999.5
(22) Anmeldetag: 13.10.2011
(51) Int. Cl.: B62D 21/06, B62D 25/08, B62D 29/00

(54) **DIAGONALSTREBENVORRICHTUNG, VERFAHREN ZU IHRER HERSTELLUNG UND MITTELS DIAGONALSTREBENVORRICHTUNG VERSTÄRKTER KRAFTFAHRZEUGUNTERBODEN**
DIAGONAL STRUT DEVICE, METHOD FOR MANUFACTURING SAME AND MOTOR VEHICLE UNDERFLOOR REINFORCED BY MEANS OF DIAGONAL STRUCTURE DEVICE
SYSTÈME DE TRAVERSES DIAGONALES, PROCÉDÉ DE FABRICATION DUDIT SYSTÈME DE TRAVERSES DIAGONALES ET DESSOUS DE CAISSE DE VÉHICULE AUTOMOBILE RENFORCÉ PAR UN SYSTÈME DE TRAVERSES DIAGONALES

(30) Priorität: 03.12.2010 DE 102010053346
(43) Veröffentlichungstag der Anmeldung: 09.10.2013
(73) Patentinhaber: Daimler AG, 70327 Stuttgart (DE)
(72) Erfinder: ANDREE, Denis, 21037 Hamburg (DE); EIPPER, Konrad, 72108 Rottenburg (DE); RUDLAFF, Thomas, 70469 Stuttgart (DE); SALKIC, Asmir, 89077 Ulm (DE); SRETENOVIC, Mirko, 70178 Stuttgart (DE)
(74) Vertreter: JENSEN & SON
(86) Internationale Anmeldenummer: PCT/EP2011/005149
(87) Internationale Veröffentlichungsnummer: WO 2012/072160

(56) Entgegenhaltungen:
- DE-A1-102010 020 793
- FR-A1- 2 915 450
- US-A1- 2004 100 085

## Beschreibung

Die Erfindung betrifft eine Diagonalstrebenvorrichtung zur aussteifenden Anordnung an einem Unterboden eines Kraftfahrzeugs nach dem Oberbegriff des Patentanspruchs 1. Ferner betrifft die Erfindung ein Verfahren zu der Herstellung der Diagonalstrebenvorrichtung bei dem eine Mehrzahl an Streben aus einem faserverstärkten Kunststoffverbundmaterial mit jeweils einem ersten Endabschnitt nahe zueinander angeordnet und gefügt werden sowie einen Kraftfahrzeugunterboden nach dem Oberbegriff des Patentanspruchs 13, in dem die Diagonalstrebenvorrichtung zum Einsatz kommt.

Diagonalstreben zur Anordnung am Unterboden eines Kraftfahrzeugs sind zur Erhöhung der Torsionssteifigkeit bekannt. Dies ist insbesondere bei Cabrios mit selbsttragender Karosserie aufgrund der fehlenden starren Dachstruktur wichtig. Über die Diagonalstreben werden Zug- und Druckkräfte von äußeren Randbereichen der Karosserie bis in einen weiter innen nahe einer vertikalen Fahrzeuglängsmittelebene liegenden Bereich beispielsweise über die Reserveradmulde eingeleitet. Diese Zug- und Druckkräfte entstehen durch unerwünschte Schwingungen und Verwindungen der Karosserie, die im Fahrbetrieb auftreten können, wodurch nachteilig Fahrsicherheit und -komfort beeinträchtigt werden und die Fahrzeugstruktur belastet wird.

So beschreibt die DE 10 2004 018 977 A1 ein Fahrzeug mit erweiterten Möglichkeiten des Strebenverlaufs und ihrer Anbindung an der Karosserie. Dazu weist das Fahrzeug vier aussteifende Streben auf, die an einem Verbindungsträger befestigt sind, der in der vertikalen Längsmittelebene des Fahrzeugs frei unter dem Unterboden und mit Abstand zu diesem angeordnet ist. Die Streben erstrecken sich von diesem Verbindungsträger weg und sind an ihren von dem Verbindungsträger abgewandten Enden an die Karosserie in deren Unterbodenbereich angebunden. Die Streben können aus Metall oder einem faserverstärkten Kunststoff gebildet sein.

Im Zuge der Leichtbauweise der Kraftfahrzeuge finden immer mehr Hybridbauelemente Verwendung, die unterschiedliche Materialien verbinden, beispielsweise Leichtmetallelemente mit faserverstärkten Kunststoffen. So offenbart die DE 698 36 259 T2 ein Leichtmetall/CFK-Bauelement, bei dem ein Kohlefaserkunststoffmaterial auf ein Leichtmetallmaterial mittels einer Haftschicht aufgeklebt ist, die ein Epoxyhaftmittel enthält und in einer Dicke von 10 bis 500 µm vorgesehen ist. Die Haftschicht soll zur Vermeidung von Kontaktkorrosion zwischen dem Kohlefasernkunststoffmaterial und dem Leichtmetallmaterial einen spezifischen Volumenwiderstand von mindestens 1·10¹³ Ω·cm und eine Haftfestigkeit bei Raumtemperatur von zumindest 15 MPa aufweisen.

Aus der DE 102006 047 511 A1 ist ein gewichtsoptimierter Achsträger aus einem Leichmetall-Werkstoff oder aus einem Nichteisenmetall-Werkstoff, beispielsweise aus einem faserverstärktem Kunststoff, bekannt.

Aus der US 2004/100085 A1 ist eine Diagonalstrebenvorrichtung zur aussteifenden Anordnung an einem Unterboden eines Kraftfahrzeugs bekannt. Diese Diagonalstrebenvorrichtung umfasst eine Mehrzahl von Streben, die sich von einem Zentralknotenelement weg erstrecken und die aus einem faserverstärkten Kunststoffverbundmaterial bestehen können. Dabei ist jede Strebe über ihr von dem Zentralknotenelement abgewandtes Ende an dem Unterboden anbindbar.

Aus der FR 2 915 450 A1 ist ein Hilfsrahmen aus Metallrohren und angegossenen Anbindungsstellen bekannt.

Aus der vorangemeldeten, nachveröffentlichten EP 1481878 A1 der Anmelderin ist eine Verbindungsanordnung eines Faserverbundbauteils mit einem Leichtmetallgussbauteil bekannt.

Ausgehend von diesem Stand der Technik ergibt sich die Aufgabe, eine die Torsionssteifigkeit eines Kraftfahrzeugs erhöhende Diagonalstrebenvorrichtung zur Anordnung an einem Kraftfahrzeugunterboden bereitzustellen, die dem Leichtbaugedanken Rechnung trägt und damit hohe Zug- und Druckfestigkeit mit geringem Gewicht verbindet und einfach in wenigen Schritten gefertigt werden kann.

Diese Aufgabe wird durch eine Diagonalstrebenvorrichtung mit den Merkmalen des Anspruchs 1, durch ein Verfahren mit den Merkmalen des Anspruchs 11, sowie einen Kraftfahrzeugunterboden mit den Merkmalen des Anspruchs 13 gelöst.

Weiterbildungen der Vorrichtung und des Verfahrens sind in den jeweiligen Unteransprüchen ausgeführt.

Ferner wird durch die Verwendung der Diagonalstrebenvorrichtung an dem Unterboden eines Kraftfahrzeugs gemäß den Merkmalen des Anspruchs 13 ein verbesserter Kraftfahrzeugunterboden offenbart.

Eine erste Ausführungsform einer erfindungsgemäßen Diagonalstrebenvorrichtung, die zur aussteifenden Anordnung an einem Unterboden eines Kraftfahrzeugs geeignet ist, bezieht sich darauf, dass die Diagonalstrebenvorrichtung mehrere Streben umfasst, die aus einem faserverstärkten Kunststoffverbundmaterial bestehen und die sich von einem Zentralknotenelement weg erstrecken. Die Diagonalstrebenvorrichtung kann über die von dem Zentralknotenelement abgewandten Enden der Streben an dem Unterboden angebunden werden. Dazu weist jede Strebe an ihrem von dem Zentralknotenelement abgewandten Ende ein erfindungsgemäßes Anbindungsknotenelement auf, das genau wie das Zentralknotenelement, aus einem Leichtmetallmaterial ausgeführt ist. Damit führen die erfindungsgemäßen Anbindungsknotenelemente zusammen mit den FVK-Streben vorteilhaft zu einem deutlich geringeren Gewicht der Aussteifungskonstruktion als die herkömmlich verwendeten Diagonalstreben aus Stahlmaterial.

Durch die fachwerkartige Konstruktion der Diagonalstrebenvorrichtung aus mehreren Streben, die einenends über einen Knoten verbunden sind und deren andere Enden an der Karosserie festlegbar sind, entstehen in den einzelnen FVK-Streben nur Zug- und Druckkräfte, wodurch die hohe Torsionssteifigkeit der Diagonalstrebenvorrichtung zu Stande kommt. Über diese können die Zug- und Druckkräfte, die an einem Kraftfahrzeugunterboden mit erfindungsgemäßer Diagonalstrebenvorrichtung vorliegen, in die Karosserie eingeleitet werden. Vorteilhaft sind die Zentral- und Anbindungsknotenelemente als Gussknotenelemente ausgeführt und so stoffschlüssig mit den Streben verbunden, indem die Zentral- und Anbindungsknotenelemente einfach an die Streben angegossen sind.

Denkbar ist aber auch, dass die Streben an ihren Endabschnitten in die Zentral- und Anbindungsknotenelemente nicht nur an- sondern eingegossen sind, oder dass die Streben zumindest an den Endabschnitten ein Hohlprofil aufweisen, in das sich das gegossene Zentralknotenelement und/oder das Anbindungsknotenelement erstreckt. Für die Vielzahl von Gussverbindungen zwischen Streben und Knotenelementen kommt auch eine Kombination der vorgenannten Verbindungstypen in Frage.

Zudem können die Streben der Diagonalstrebenvorrichtung an ihren Endabschnitten, an denen die Knoten an- oder eingegossen werden, Durchbrüche aufweisen, die durch das Gussmaterial der Gussverbindung durchdrungen werden und einen Formschluss ausbilden. Alternativ oder zusätzlich können die Endabschnitte der Streben mit Strukturen versehen sein, die durch das Gussmaterial der Gussverbindung formschlüssig umgeben werden.

In einer weiteren Ausführungsform der erfindungsgemäßen Diagonalstrebenvorrichtung ist vorgesehen, dass die Streben zumindest an ihren Endabschnitten, an denen die Gussverbindung vorgesehen ist, mit einer thermisch isolierenden Beschichtung versehen sind. Diese thermisch isolierende Beschichtung verhindert während des Angießens der Knotenelemente eine Beschädigung des FVK-Materials der Streben. Alternativ oder zusätzlich zur thermisch isolierenden Beschichtung kann eine metallische Beschichtung der Endabschnitte sinnvoll sein, so dass die metallische Beschichtung die stoffschlüssige Verbindung mit den gegossenen Knotenelementen bereitstellt.

Auch ist es denkbar, die Streben zumindest an ihren Endabschnitten mit einer haftverbessernden Beschichtung auszustatten, die beispielsweise eine strukturierte Oberfläche aufweist und somit eine mechanische Verklammerung des Gussknotenelements an den Endabschnitten bewirkt.

Eine weitere erfindungsgemäße Ausführungsform der Diagonalstrebenvorrichtung bezieht sich darauf, dass die Diagonalstrebenvorrichtung Fügehilfsmittel aufweist, mittels derer sie einfacher an den Kraftfahrzeug-Unterboden, der gegebenenfalls korrespondierende Fügemittel aufweisen kann, gefügt werden kann. Die Fügehilfsmittel sind an den Anbindungsknotenelementen vorgesehen und es kann sich dabei um Bohrungen, Inserts, Gewinde, Klebeflächen, Clinchelemente und/oder Schweißflächen handeln.

Ferner kann die stoffschlüssige Gussverbindung der Streben mit dem Zentralknotenelement und den Anbindungsknotenelementen zusätzlich durch eine kraftschlüssige Verbindung, die durch die Verwendung von Nieten oder Schrauben erreicht werden kann, verstärkt werden, die die Anbindung eines jeweiligen Elements an den Streben sichert.

Die Streben der Diagonalstrebenvorrichtung können FVK-Pultrusionsprofile sein, die insbesondere einen Faseranteil von bis zu 70 %, bezogen auf das Gesamtgewicht der Profile, und damit eine hohe Zug- und Druckfestigkeit aufweisen können.

Bevorzugt wird die Diagonalstrebenvorrichtung aus bis zu vier Streben gebildet. In einer besonderen Ausführungsform wird die Diagonalstrebenvorrichtung aus vier Streben gebildet, die X-förmig an dem Zentralknotenelement angeordnet sind. Bei einer solchen Diagonalstrebenvorrichtung, aber auch bei hinsichtlich der Strebenanzahl oder -anordnung anders ausgeführten Diagonalstrebenvorrichtungen, können die Streben in Bezug zueinander geneigt an dem Zentralknotenelement angeordnet sein, so dass das Zentralknotenelement von der Ebene, die die an den anderen Enden der Streben befindlichen Anbindungselemente aufspannen, beabstandet ist. Diese Beabstandung ermöglicht auch die Anbringung der Diagonalstrebenvorrichtung an einem Unterboden mit schwierigen Karosserieverhältnissen.

Bei dem Leichtmetallmaterial zur Bildung der Knotenelemente handelt es sich um ein Leichtmetall oder eine Leichtmetalllegierung wie Aluminium oder Magnesium beziehungsweise deren Legierungen beispielsweise mit Silicium.

Ein erfindungsgemäßes Herstellungsverfahren für die Diagonalstrebenvorrichtung umfasst die Schritte:
- Bereitstellen der FVK-Streben und Einlegen in ein Druckgusswerkzeug, wobei die FVK-Streben mit einem ersten Endabschnitt nahe zueinander in einem zur Ausbildung des Zentralknotenelements vorgesehenen Bereich in einer Kavität und mit ihren zweiten Endabschnitten beabstandet voneinander in jeweils einem zur Ausbildung der Anbindungsknotenelemente vorgesehenen Bereich in einer Kavität zu liegen kommen,
- Schließen des Werkzeugs und Druckgießen eines geschmolzenen Leichtmetallmaterials in die Kavitäten, dabei Ausbilden des Zentralknotenelements und der Anbindungsknotenelemente und gleichzeitig stoffschlüssig Verbinden des Zentralknotenelements und der Anbindungsknotenelemente mit den Streben, und
- Entnehmen der Diagonalstrebenvorrichtung.

Das Herstellungsverfahren erfordert vorteilhaft lediglich das Einlegen der FVK-Streben in das Werkzeug und das Umgießen mit Leichtmetallguss und ist daher einfach und effizient auszuführen. Weitere Schritte zum Zusammenfügen der Zentralknoten- und Anbindungsknotenelemente mit den Streben entfallen.

Während des Druckgießens kann die Wärme der Leichtmetallschmelze mittels eines Kühlsystems des Werkzeugs abgeführt werden, um eine Beschädigung der FVK-Streben zu vermeiden.

Alternativ oder additiv dazu kann eine thermisch isolierende und geschlossene Schicht auf eine Oberfläche eines Abschnitts der faserverstärkten Kunststoff-Strebe, der von einem flüssigen Leichtmetall oder einer flüssigen Leichtmetalllegierung umgossen werden soll, aufgebracht werden. Die thermisch isolierende Schicht ist vorzugsweise thermisch beständig, stabil, geschlossen und/oder gasdicht. Vorzugsweise weist die thermisch isolierende Schicht wenigstens ein metallisches oder keramisches oder polymeres Material oder eine Kombination der vorgenannten Materialien auf. Die thermisch isolierende Schicht weist eine bevorzugte Dicke von 10 µm bis 1000 µm auf. Die thermisch isolierende Schicht weist ferner vorzugsweise eine die Haftung des Leichtmetallmaterials auf der faserverstärkten Kunststoff-Strebe unterstützende Beschaffenheit auf. Das Aufbringen der thermisch isolierenden Schicht kann vorzugsweise mittels Wickeln, Tauchen, Sprühen, Pulverbeschichten, Schleuderbeschichten, Plasmaspritzen oder auf eine andere geeignete Weise erfolgen.

Die erfindungsgemäße Diagonalstrebenvorrichtung eignet sich zur aussteifenden Anordnung an einem Unterboden eines Kraftfahrzeugs, wobei das Zentralknotenelement der Diagonalstrebenvorrichtung unter dem Unterboden in einer vertikalen Längsmittelebene des Kraftfahrzeugs angeordnet wird und die Diagonalstrebenvorrichtung mittels der Anbindungsknotenelemente mit dem Unterboden in der Montage oder im Rohbau vernietet, verschraubt, geklebt, geclincht und/oder verschweißt wird.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich eine schematische Darstellung einer Ausführungsform der Erfindung.

Dabei zeigt:

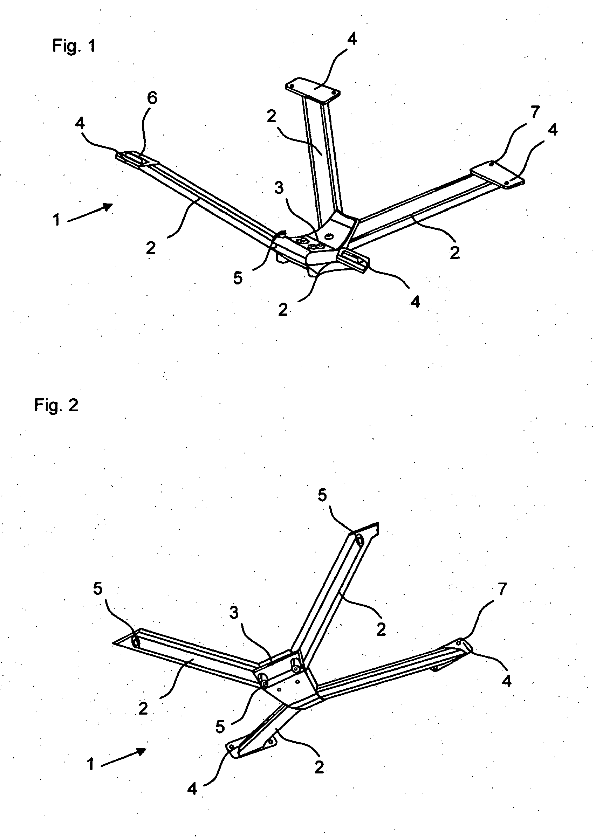

- Fig. 1: eine perspektivische Draufsicht einer erfindungsgemäßen Ausführungsform der Diagonalstrebenvorrichtung,
- Fig. 2: eine perspektivische Ansicht von unten auf eine erfindungsgemäße Ausführungsform der Diagonalstrebenvorrichtung.

Die erfindungsgemäße Diagonalstrebenvorrichtung bezieht sich auf eine beispielhaft in den Figuren dargestellte sogenannte Fachwerkskonstruktion.

Die Diagonalstrebenvorrichtung 1 besteht aus vier pultrudierten FVK-Profilstreben 2, die über einen zentralen Leichtmetallgussknoten 3 miteinander verbunden sind. Selbstverständlich ist eine andere Strebenanzahl, etwa sechs Streben, möglich. Die zur Anbindung an einen Kraftfahrzeug-Unterbau vorgesehenen Anbindungsknotenelemente 4 bestehen ebenfalls aus einem Leichtmetallmaterial. Die so gestaltete Diagonalstrebenvorrichtung 1 kann am Unterboden in der Montage oder auch schon im Rohbau befestigt werden. Dies wird durch die gegossenen Anbindungsknotenelemente 4 ermöglicht, die dazu entsprechende Fügehilfsmittel aufweisen können.

Durch den Einsatz eines Leichtmetallmaterials zur Schaffung der Knoten 3,4 kann der Gewichtsvorteil der FVK-Streben 2 erhalten bleiben. Leichtmetallmaterialien sind Leichtmetalle und Legierungen mit einer Dichte unter 5 g/cm³. Vor allem Aluminium, Magnesium, Titan sowie in geringem Umfang Beryllium und Lithium finden technischen Einsatz. Sowohl für Aluminium- als auch Magnesiumlegierungen lassen sich im Druckguss Bauteile endabmessungsnah ohne kostenintensive Nachbearbeitung fertigen. Eine spanende Nachbearbeitung ist möglich.

Die in den Figuren gezeigte Diagonalstrebenvorrichtung 1 kann zur Aussteifung der Karosserie an einem Unterboden eines Kraftfahrzeugs angeordnet werden, wobei das Zentralknotenelement 3 der Diagonalstrebenvorrichtung 1 unter dem Unterboden in einer vertikalen Längsmittelebene des Kraftfahrzeugs angeordnet wird und die Diagonalstrebenvorrichtung 1 mittels der Anbindungsknotenelemente 4 mit dem Unterboden in der Montage oder im Rohbau vernietet, verschraubt, geklebt, geclincht und/oder verschweißt wird.

Die Diagonalstrebenvorrichtung 1 in den Figuren weist vier Streben 2 aus einem faserverstärkten Kunststoffverbundmaterial auf, bei denen es sich um FVK-Pultrusionsprofile 2 handelt, die einen Faseranteil bis zu 70 % haben können und die sich von dem Zentralknotenelement 3 X-förmig und geneigt weg erstrecken, so dass die von dem Zentralknotenelement 3 abgewandten Enden der Streben 2, an denen die Anbindungsknotenelemente 4 vorliegen, eine Ebene aufspannen, die von dem Zentralknotenelement 3 beabstandet ist.

Dadurch, dass die Knotenelemente 3,4 an die Endabschnitte der Streben 2 angegossen sind, wird eine stoffschlüssige Verbindung bereitgestellt. Je nach Gestaltung der Knotenelemente 3,4 bezüglich der Strebenanordnung und auch in Bezug auf die vorgesehene Karosserieanbindung genügt es, wenn die Knotenelemente 3,4 lediglich an die Endabschnitte der Streben 2 angegossen sind, die Endabschnitte der Streben 2 können aber auch in das Zentralknotenelement 3 und/oder die Anbindungsknotenelemente 4 eingegossen sein, um die Verbindung zu stärken. Es kann sich aber auch ein Abschnitt des jeweiligen Gussknotens 3,4 in das Innere eines als Hohlprofil ausgeführten Streben-Endabschnitts erstrecken, so dass das Zentralknotenelement 3 und/oder das Anbindungsknotenelement 4 teilweise in die Streben-Endabschnitte eingegossen sind.

Die Gussverbindung kann durch Durchbrüche und/oder Strukturen verstärkt werden, die die Streben 2 an ihren Endabschnitten aufweisen können und die durch das Gussmaterial der Gussverbindung formschlüssig durchdrungen und/oder umgeben werden.

Ferner ist zum Schutz der FVK-Streben 2 vor Wärmeeintrag der Leichtmetallschmelze während des Angießens, da die Schmelzbereiche der Leichtmetallschmelze zwischen 400 und 660 °C liegen, denkbar, dass die Streben 2 zumindest an ihren Endabschnitten, an denen die Gussverbindung vorgesehen ist, mit einer thermisch isolierenden Beschichtung und/oder einer metallischen Beschichtung versehen sind.

Eine Beschichtung der Endabschnitte der Streben 2 kann auch zur Haftverbesserung beitragen, indem die Beschichtung eine strukturierte Oberfläche bereitstellt, die eine Verklammerung des an die Streben 2 angegossenen Knotenelementematerials erlaubt.

Die Anbindungsknotenelemente 4 weisen gegebenenfalls Fügehilfsmittel auf, mittels derer die Diagonalstrebenvorrichtung 1 leicht an einen Unterboden gefügt werden kann, der in diesem Falle den Anbindungsknotenelementen 4 entsprechende Fügestellen aufweisen sollte. Als Fügehilfsmittel kommen Bohrungen 7 oder Inserts, mit oder ohne Gewinde in den Anbindungsknotenelementen 4 in Frage, die ein Fügen mit Nieten oder Schrauben gestatten. Denkbar ist aber auch, dass die Anbindungsknotenelemente 4 zum Kleben oder Schweißen vorgesehene Flächen bereitstellen. Eine andere Fügemöglichkeit für die Anbindungsknotenelemente 4 liegt in der Ausbildung von Clinchelementen 6, die eine druckknopfähnliche Form aufweisen und mit einem korrespondierenden Gegenelement (an dem Unterboden) eine form- und kraftschlüssige Verbindung eingehen.

Die verschiedenen Anbindungsknotenelemente 4 einer Diagonalstrebenvorrichtung 1 können dabei unterschiedliche Fügehilfsmittel aufweisen.

Das Zentralknotenelement 3 oder die Anbindungsknotenelemente 4 oder beide können zusätzlich durch eine kraftschlüssige Verbindung wie mittels Nieten oder Schrauben 5 mit den Streben 2 verbunden sein.

Zur Herstellung der Diagonalstrebenvorrichtung 1 werden die benötigten FVK-Streben 2 vorzugsweise durch Pultrusion hergestellt und in ein Druckgusswerkzeug eingelegt. Das Druckgusswerkzeug weist für die auszubildenden Knotenelemente Kavitäten sowie Ausnehmungen für die einzulegenden Streben auf. Eine zentrale Kavität dient der Bildung des Zentralknotenelements 3. Die eingelegten Streben 2 ragen einenends an oder in die zentrale Kavität, so dass dort die Gussverbindung hergestellt werden kann. An den anderen Enden der Strebenausnehmungen befinden sich im Gusswerkzeug die zur Bildung der Anbindungsknotenelemente 4 vorgesehenen Kavitäten, an die oder in die sich die eingelegten Streben 2 erstrecken. Mit den eingelegten Streben 2 wird das Werkzeug geschlossen und ein Druckgussvorgang gestartet. Das geschmolzene Leichtmetallmaterial gelangt in die Kavitäten und bildet dort das Zentralknotenelement 3 und die Anbindungsknotenelemente 4 aus, wobei gleichzeitig der stoffschlüssige Verbund mit den Streben 2 entsteht. Nach Erstarrung der gegossenen Knotenelemente 3,4 kann die Diagonalstrebenvorrichtung 1 entnommen werden.

Zum Schutz der FVK-Streben vor Wärmeschaden kann die mit der Schmelze eingeführte Wärme während des Druckgießens mittels eines Kühlsystems des Werkzeugs abgeführt werden.

## Patentansprüche

1. Diagonalstrebenvorrichtung (1)
zur aussteifenden Anordnung an einem Unterboden eines Kraftfahrzeugs, wobei die Diagonalstrebenvorrichtung (1) eine Mehrzahl von Streben (2) aus einem faserverstärkten Kunststoffverbundmaterial umfasst,
die sich von einem Zentralknotenelement (3) weg erstrecken,
wobei jede Strebe (2) über ihr von dem Zentralknotenelement (3) abgewandtes Ende an dem Unterboden anbindbar ist,
**dadurch gekennzeichnet, dass**
ein Anbindungsknotenelement (4) an dem von dem Zentralknotenelement (3) abgewandten Ende jeder Strebe (2) zur Bereitstellung der Anbindung an dem Unterboden angeordnet ist, und
dass das Zentralknotenelement (3) und die Anbindungsknotenelemente (4) aus einem Leichtmetallmaterial ausgeführt und durch eine zumindest stoffschlüssige Gussverbindung mit den Streben (2) verbunden sind.

2. Diagonalstrebenvorrichtung (1) nach Anspruch 1,
**dadurch gekennzeichnet, dass**
das Zentralknotenelement (3) und/oder die Anbindungsknotenelemente (4) an die Endabschnitte der Streben (2) angegossen sind, und/oder die Endabschnitte der Streben (2) in das Zentralknotenelement (3) und/oder die Anbindungsknotenelemente (4) eingegossen sind, und/oder die Streben (2) zumindest an den Endabschnitten ein Hohlprofil aufweisen, in das das Zentralknotenelement (3) und/oder das Anbindungsknotenelement (4) eingegossen ist.

3. Diagonalstrebenvorrichtung (1) nach Anspruch 1 oder 2,
**dadurch gekennzeichnet, dass**
die Streben (2) an ihren Endabschnitten Durchbrüche und/oder Strukturen aufweisen, die durch das Gussmaterial der Gussverbindung formschlüssig durchdrungen und/oder umgeben werden.

4. Diagonalstrebenvorrichtung (1) nach zumindest einem der Ansprüche 1 bis 3,
**dadurch gekennzeichnet, dass**
die Streben (2) zumindest an ihren Endabschnitten, an denen die Gussverbindung vorgesehen ist, mit einer thermisch isolierenden Beschichtung und/oder einer metallischen Beschichtung versehen sind.

5. Diagonalstrebenvorrichtung (1) nach zumindest einem der Ansprüche 1 bis 4,
**dadurch gekennzeichnet, dass**
die Streben (2) zumindest an ihren Endabschnitten, an denen die Gussverbindung vorgesehen ist, mit einer haftverbessernden Beschichtung versehen sind, die insbesondere eine strukturierte Oberfläche bereitstellt.

6. Diagonalstrebenvorrichtung (1) nach zumindest einem der Ansprüche 1 bis 5,
**dadurch gekennzeichnet, dass**
die Diagonalstrebenvorrichtung (1) Fügehilfsmittel aufweist, mittels derer die Diagonalstrebenvorrichtung (1) an den Unterboden fügbar ist, wobei die Fügehilfsmittel an den Anbindungsknotenelementen (4) vorgesehen sind und Bohrungen, Inserts, Gewinde, Klebeflächen, Clinchelemente und/oder Schweißflächen umfassen.

7. Diagonalstrebenvorrichtung (1) nach zumindest einem der Ansprüche 1 bis 6,
**dadurch gekennzeichnet, dass**
dass das Zentralknotenelement (3) und/oder die Anbindungsknotenelemente (4) zusätzlich durch eine kraftschlüssige Verbindung insbesondere durch Nieten oder Schrauben (5) mit den Streben (2) verbunden sind.

8. Diagonalstrebenvorrichtung (1) nach zumindest einem der Ansprüche 1 bis 7,
**dadurch gekennzeichnet, dass**
die Streben (2) FVK-Pultrusionsprofile (2), insbesondere mit einem Faseranteil bis zu 70 %, bezogen auf das Geamtgewicht des FVK-Pultrusionsprofils (2), sind.

9. Diagonalstrebenvorrichtung (1) nach zumindest einem der Ansprüche 1 bis 8,
**dadurch gekennzeichnet, dass**
die Diagonalstrebenvorrichtung (1) bis zu vier Streben (2) umfasst, die insbesondere X-förmig an dem Zentralknotenelement (3) angeordnet sind, und/oder die in Bezug zueinander geneigt an dem Zentralknotenelement (3) angeordnet sind, so dass das Zentralknotenelement (3) von einer Ebene, die die Anbindungselemente (4) aufspannen, beabstandet ist.

10. Diagonalstrebenvorrichtung (1) nach zumindest einem der Ansprüche 1 bis 9,
**dadurch gekennzeichnet, dass**
das Leichtmetallmaterial ein Leichtmetall oder eine Leichtmetalllegierung ist.

11. Verfahren zur Herstellung einer Diagonalstrebenvorrichtung (1) nach zumindest einem der Ansprüche 1 bis 10,
umfassend die Schritte:
- Bereitstellen der Mehrzahl an Streben (2) aus einem faserverstärkten Kunststoffverbundmaterial und Einlegen in ein Druckgusswerkzeug, wobei die Streben (2) mit jeweils einem ersten Endabschnitt nahe zueinander in einem zur Ausbildung des Zentralknotenelements (3) vorgesehenen Bereich in einer Kavität und mit ihren zweiten Endabschnitten beabstandet voneinander in jeweils einem zur Ausbildung der Anbindungsknotenelemente (4) vorgesehenen Bereich in einer Kavität zu liegen kommen,
- Schließen des Druckgusswerkzeugs und Druckgießen eines geschmolzenen Leichtmetallmaterials in die Kavitäten, dabei Ausbilden des Zentralknotenelements (3) und der Anbindungsknotenelemente (4) und gleichzeitig stoffschlüssig Verbinden des Zentralknotenelements (3) und der Anbindungsknotenelemente (4) mit den Streben (2), und
- Entnehmen der Diagonalstrebenvorrichtung (1).

12. Verfahren nach Anspruch 11,
umfassend den Schritt:
- während des Druckgießens Abführen von Wärme mittels eines Kühlsystems des Druckgusswerkzeugs aus dem Druckgusswerkzeug.

13. Kraftfahrzeugunterboden, der durch eine Diagonalstrebenvorrichtung ausgesteift ist, die an dem Kraftfahrzeugunterboden angeordnet ist, indem die Diagonalstrebenvorrichtung eine Mehrzahl von Streben (2) aus einem faserverstärkten Kunststoffverbundmaterial umfasst, die sich von einem Zentralknotenelement (3) weg erstrecken, wobei jede Strebe (2) über ihr von dem Zentralknotenelement (3) abgewandtes Ende an dem Unterboden angebunden ist,
**dadurch gekennzeichnet, dass**
ein Anbindungsknotenelement (4) an dem von dem Zentralknotenelement (3) abgewandten Ende jeder Strebe (2) angeordnet und die Anbindung mit dem Unterboden unlösbar bereitstellt, und
dass das Zentralknotenelement (3) und die Anbindungsknotenelemente (4) aus einem Leichtmetallmaterial ausgeführt und durch eine zumindest stoffschlüssige Gussverbindung mit den Streben (2) verbunden sind.

## Claims

1. Diagonal strut device (1)
for reinforcing arrangement on an undercarriage of a motor vehicle,
wherein the diagonal strut device (1) comprises a plurality of struts (2) made from a fibre-reinforced plastic composite material,
which extend away from a central joint element (3),
wherein each strut (2) can be connected to the undercarriage via this from the end facing away from the central joint element (3),
**characterised in that**,
a connecting joint element (4) is arranged on the end of each strut (2) facing away from the central joint element (3) to provide the connection to the undercarriage, and
that the central joint element (3) and the connecting joint elements (4) are formed from a light metal material and are connected to the struts (2) by an at least firmly-bonded cast joint.

2. Diagonal strut device (1) according to claim 1,
**characterised in that**,
the central joint element (3) and/or the connecting joint elements (4) are cast into the end sections of the struts (2), and/or
the end sections of the struts (2) are moulded into the central joint element (3) and/or the connecting joint elements (4), and/or
the struts (2) have a hollow profile at least at the end sections, into which the central joint element (3) and/or the connecting joint element (4) is moulded.

3. Diagonal strut device (1) according to claim 1 or 2,
**characterised in that**,
the struts (2) have openings and/or structures at their end sections, which are permeated and/or enclosed positively by the cast material of the cast joint.

4. Diagonal strut device (1) according to at least one of claims 1 to 3,
**characterised in that**,
the struts (2) have a thermally insulating coating and/or a metallic coating added to them at least at their end sections, at which the cast joint is provided.

5. Diagonal strut device (1) according to at least one of claims 1 to 4,
**characterised in that**,
the struts (2) have an adhesion-improving coating added to them at least at their end sections, at which the cast joint is provided, which in particular provides a structured surface.

6. Diagonal strut device (1) according to at least one of claims 1 to 5,
**characterised in that**,
the diagonal strut device (1) comprises connecting aids, by means of which the diagonal strut device (1) can be connected to the undercarriage, wherein the connecting aids are provided on the connecting joint elements (4) and comprise bore-holes, inserts, screw threads, adherends, clinch elements and/or weld contact areas.

7. Diagonal strut device (1) according to at least one of claims 1 to 6,
**characterised in that**,
the central joint element (3) and or the connecting joint elements (4) are additionally connected to the struts (2) by a force-fit connection, in particular by riveting or screwing (5).

8. Diagonal strut device (1) according to at least one of claims 1 to 7,
**characterised in that**,
the struts (2) are fibre-reinforced plastic pultrusion profiles (2), in particular having a fibre proportion of up to 70% with respect to the total weight of the fibre-reinforced plastic pultrusion profile (2).

9. Diagonal strut device (1) according to at least one of claims 1 to 8,
**characterised in that**,
the diagonal strut device (1) comprises up to four struts (2), which are in particular arranged in an X-shape on the central joint element (3), and/or which are arranged slanted towards one another at the central joint element (3), such that the central joint element (3) is separated from a plane that fixes the fastening element (4).

10. Diagonal strut device (1) according to at least one of claims 1 to 9,
**characterised in that**,
the light metal material is a light metal or a light metal alloy.

11. Method for the production of a diagonal strut device (1) according to at least one of claims 1 to 10,
comprising the following steps:
- providing the plurality of struts (2) made from a fibre-reinforced plastic composite material and inserting them into a die-casting tool, wherein the struts (2) are located close to one another with a first end section in a region provided for the formation of the central joint element (3) in one cavity and, with their second end sections, are located separated from one another in a respective region in a cavity, which is provided for the formation of the connecting joint element (4),
- closing the die-casting tool and die-casting a molten light metal material into the cavities, then forming the central joint element (3) and connecting joint elements (4) and simultaneously firmly bonding the central joint element (3) and the connecting joint elements (4) to the struts (2), and
- removing the diagonal strut device (1).

12. Method according to claim 11,
comprising the following step:
- during the die-casting, discharging heat from the die-casting tool by means of a cooling system for the die-casting tool.

13. Motor vehicle undercarriage, which is reinforced by a diagonal strut device arranged on the motor vehicle undercarriage, wherein the diagonal strut device comprises a plurality of struts (2) made from a fibre-reinforced plastic composite material, which extend away from a central joint element (3), wherein each strut (2) is connected to the undercarriage via this from the end facing away from the central joint element (3),
**characterised in that**,
a connecting joint element (4) is arranged on the end of each strut (2) facing away from the central joint element (3) and the connection with the undercarriage is provided unreleasably, and
that the central joint element (3) and the connecting joint elements (4) are formed from a light metal material and are connected to the struts (2) by an at least firmly-bonded cast joint.

## Revendications

1. Système de traverses diagonales (1) destiné à être agencé sur un dessous de caisse d'un véhicule automobile, de manière à le renforcer, le système de traverses diagonales (1) comprenant une pluralité de traverses (2) qui sont constituées d'un matériau composite plastique renforcé par des fibres et s'étendent depuis un élément noeud central (3), chaque traverse (2) pouvant être fixée au dessous de caisse par l'intermédiaire de son extrémité opposée à l'élément noeud central (3), **caractérisé en ce qu'**un élément noeud de fixation (4) est agencé à l'extrémité de chaque traverse (2) opposée à l'élément de noeud central (3), de manière à préparer la liaison au dessous de caisse, l'élément de noeud central (3) et les éléments de noeud de fixation (4) étant constitués d'un matériau métallique léger, et étant reliés aux traverses (2) par un joint coulé au moins par liaison de matière.

2. Système de traverses diagonales (1) selon la revendication 1, **caractérisé en ce que** l'élément de noeud central (3) et/ou les éléments de noeud de liaison (4) sont assemblés par la fonte sur les sections d'extrémités des traverses (2), et/ou les sections d'extrémité des traverses (2) et/ou les éléments de noeud de liaison (4) sont coulées dans l'élément de noeud central (3), et/ou les traverses (2) présentent au moins sur les sections d'extrémité un profilé creux, dans lequel l'élément de noeud central (3) et/ou l'élément de noeud de liaison (4) est coulé.

3. Système de traverses diagonales (1) selon la revendication 1 ou la revendication 2, **caractérisé en ce que** les traverses (2) présentent sur leurs sections d'extrémité des passages et/ou des structures que pénètre et/ ou entoure le matériau de fonte de la liaison de fonde par liaison positive.

4. Système de traverses diagonales (1) selon au moins l'une quelconque des revendications 1 à 3, **caractérisé en ce que** les traverses (2) au moins sur leurs sections d'extrémité, sur lesquelles le joint coulé est prévu, sont dotées d'un revêtement thermo-isolant et/ou d'un revêtement métallique.

5. Système de traverses diagonales (1) selon au moins l'une quelconque des revendications 1 à 4, **caractérisé en ce que** les traverses (2) au moins sur leurs sections d'extrémité, sur lesquelles le joint coulé est prévu, sont dotées d'un revêtement permettant d'améliorer l'adhérence, qui fournit une surface structurée.

6. Système de traverses diagonales (1) selon au moins l'une quelconque des revendications 1 à 5, **caractérisé en ce que** le dispositif de traverses diagonales (1) présente des moyens auxiliaires d'assemblage, qui permettent d'assembler le dispositif de traverses diagonales (1) au dessous de caisse, les moyens auxiliaires d'assemblage sont disposés sur les éléments de noeud de liaison et comprennent des alésages, des inserts, des filetages, des faces de collage, des éléments d'engorgement et/ou des faces de soudure..

7. Système de traverses diagonales (1) selon au moins l'une des revendications 1 à 6, **caractérisé en ce que** l'élément de noeud central (3) et/ou les éléments de noeud de liaison (4) sont reliées en outre par une liaison de force en particulier par des rivets ou des vis (5) aux traverses (2).

8. Système de traverses diagonales (1) selon au moins l'une quelconque des revendications 1 à 7, **caractérisé en ce que** les traverses (2) sont des profilés fabriqués par pultrusion (2) de matière plastique (2) renforcée par des fibres, en particulier ayant une teneur en fibres inférieure ou égale à 70 % par rapport au poids total du profilé fabriqué par pultrusion de matière plastique (2) renforcée par des fibres.

9. Système de traverses diagonales (1) selon au moins l'une quelconque des revendications 1 à 8, **caractérisé en ce que** le dispositif de traverses diagonales (1) comprend quatre traverses (2) au plus qui sont disposées notamment en X sur l'élément de noeud central (3) et/ou qui sont disposées de manière inclinées les unes par rapport aux autres sur l'élément de noeud central (3) de manière que l'élément de noeud central (3) soit éloigné d'un plan qui fixent les éléments de liaison (4).

10. Système de traverses diagonales (1) selon au moins l'une quelconque des revendications 1 à 9, **caractérisé en ce que** le matériau en métal léger est un métal léger ou un alliage de métal léger.

11. Procédé de production d'un système de traverses diagonales (1) selon au moins l'une quelconque des revendications 1 à 10, comprenant les étapes suivantes :
- préparer la pluralité des traverses (2) en matériau composite plastique renforcé de fibres et placer dans un outil de coulage sous pression, les traverses (2) dotées chacune d'une première section d'extrémité venant se placer à proximité des unes des autres dans une zone destinée à former l'élément de noeud central (3) dans une cavité et dotées de leurs secondes sections d'extrémité s'éloignant dans une cavité destinée à la formation des éléments de noeud de liaison (4) dans une cavité (4),
- fermer l'outil de coulage sous pression et couler sous pression un matériau métallique léger en fusion, tout en formant l'élément de noeud central (3) et les éléments de noeud de liaison (4) et relier simultanément par liaison de matière l'élément de noeud central (3) et les éléments de noeud de liaison (4) aux traverses (2), et
- retirer le système de traverses diagonales (1).

12. Procédé selon la revendication 11, comprenant l'étape :
- pendant le coulage sous pression évacuer la chaleur au moyen d'un système de refroidissement de l'outil de coulage sous pression provenant de l'outil de coulage sous pression.

13. Dessous de caisse d'un véhicule automobile, qui est renforcé par un système de traverses diagonales qui est disposé sur le dessous de caisse de véhicule automobile, le système de traverses diagonales comprenant une pluralité de traverses (2) constituées d'un matériau composite plastique renforcé par des fibres, qui s'étendent à partir d'un élément noeud central (3), chaque traverse (2) pouvant être fixée au dessous de caisse par l'intermédiaire de son extrémité opposée à l'élément noeud central (3), **caractérisé en ce qu'**un élément noeud de fixation (4) est agencé à l'extrémité de chaque traverse (2) opposée à l'élément de noeud central (3), et prépare la liaison au dessous de caisse, et **en ce que** l'élément de noeud central (3) et les éléments de noeud de fixation (4) sont constitués d'un matériau métallique léger et sont reliés aux traverses (2) par un joint coulé au moins par liaison de matière.
